## Europäisches Patentamt

## European Patent Office

## Office européen des brevets

(19)

(11) **EP 1 308 619 A1**

(12) **EUROPÄISCHE PATENTANMELDUNG**

(43) Veröffentlichungstag:
  **07.05.2003  Patentblatt 2003/19**

(51) Int Cl.⁷: **F03B 15/20**

(21) Anmeldenummer: **02079485.5**

(22) Anmeldetag: **28.10.2002**

(84) Benannte Vertragsstaaten:
  **AT BE BG CH CY CZ DE DK EE ES FI FR GB GR
  IE IT LI LU MC NL PT SE SK TR**
  Benannte Erstreckungsstaaten:
  **AL LT LV MK RO SI**

(30) Priorität: **31.10.2001  IT   BZ20010051**

(71) Anmelder: **Turbinenbau Troyer GmbH / S.r.l.
  39049 Vipiteno (BZ) (IT)**

(72) Erfinder: **Troyer, Ernst
  39040 Prati/Val di Vizze (BZ) (IT)**

(74) Vertreter: **Faraggiana, Vittorio, Dr. Ing.
  Ingg. Guzzi & Ravizza S.r.l.
  Via Vincenzo Monti 8
  20123 Milano (IT)**

(54) **Mehrdüsige peltonturbine**

(57)    Beschrieben wird eine mehrdüsige Peltonturbine, umfassend ein Turbinenrad (1) mit Radscheibe und Bechern, eine Vielzahl von Druckdüsen (4, 5) zur Beaufschlagung der Becher.

Die Erfindung ist gekennzeichnet durch die Kombination von Düsen (5) mit fixem Durchmesser und somit festen Wasserdurchsatz und Düsen (4) mit regelbaren Austritt der Wassermenge, wobei je nach Leistungsbedarf und Wasserangebot einzelne feste Düsen zu- oder weggeschalten werden und die regelbaren Düsen (4) einen Wasserbedarf decken, der zwischen dem von zugeschalteten, offenen festen Düsen (5) gelieferten Wasserdurchsatz und jenem von einer einzigen, geschlossenen festen Düse (5) lieferbarem Durchsatz liegt.

FIG.1

EP 1 308 619 A1

**Beschreibung**

Die vorliegende Erfindung bezieht sich auf eine mehrdüsige Peltonturbine gemäß dem Oberbegriff des Anspruchs 1.

Aus dem Dokument Patentabstracts of Japan Veröffentlichungsnummer 02.286881 ist ein Verfahren zum Schalten von Peltonturbinen bekannt, zur Beseitigung von Änderungen der Abgabeleistung, den Öffnungsgrad von Paaren von Nadeldüsen zu erhöhen, die verschieden gegenüber einem Paar von völlig geöffneten Nadeldüsen sind, sobald die Abgabeleistung einer hydraulischen Turbine erhöht wurde und unter Umstellung der Düsen mit dem entgegengesetzten Verfahren, wenn die Abgabeleistung vermindert wird. Zur Lösung dieses Problems wird in diesem Dokument vorgeschlagen, dass bei einer kleinen Last die Nadeln von Düsen auf ein Druckverteilerventil zur Überwachung des Öffnungsgrades wirken, sodass das Wasser in einem Umfang ausgestrahlt wird, welcher der Last in diesem Moment entspricht und folgendermaßen die betreffende Turbine eine Leistung abgibt, die diesen abzustrahlenden Wasserumfang entspricht. Sollte die Last weiter steigen, wobei ein Wasserstrahlumfang erfordert wird, der größer ist als der durch die volloffenen Düsen erhalten wird, so werden diese voll geöffnet und weitere Düsen werden durch andere Druckverteilerventile gesteuert, während der Ventilöffnungsgrad durch die Düsennadeln gesteuert wird. Folglich wird das Wasser in einem Umfang abgestrahlt, der dem gesteuerten Öffnungsgrad der Düsen entspricht und die hydraulische Turbine wird die entsprechende Leistung abgeben. Bei abnehmender Last wird das Verfahren umgekehrt.

Das in diesem Dokument angegebene Verfahren ist aufwändig, da es eine Vielzahl von Nadeldüsen erfordert, die vor allem teuer in ihrer Beschaffung sind. Überdies ist die stufenweise Einstellung von mehreren Düsen, im vorliegenden Fall von vier, sehr aufwändig und fehleranfällig, da geregelte Düsen durch ihre beweglichen Teile einem großen Verschleiß ausgesetzt sind und daher nach einer bestimmten Standzeit ausgewechselt werden müssen. Es ist daher leicht vorstellbar, wie sich die Regelbarkeit von mehreren Düsen sowohl auf die Kompliziertheit des Verfahrens als auch auf die Anschaffungs- und Wartungskosten auswirkt.

Die Aufgabe der vorliegenden Erfindung liegt daher darin, eine mehrdüsige Peltonturbine und ein Verfahren für deren Betrieb vorzuschlagen, die wirtschaftlich in der Ausführung und weniger störanfällig sind.

Diese Aufgabe wird in einer mehrdüsige Peltonturbine durch den kennzeichnenden Teil des Anspruchs 1 für die Turbine und durch den kennzeichnenden Teil des Anspruchs 4 für deren Verfahren in der Regelung erreicht.

Durch die neue Peltonturbine werden die Anschaffungskosten derselben stark reduziert, da für deren Regelung mindestens eine einzige geregelte Düse bzw. Nadeldüse erforderlich ist, während die Fixdüsen bzw. nicht einstellbaren Düsen die verschiedenen Stufen der Regelung übernehmen, während die Feineinstellung von Stufe zu Stufe die geregelte Düse übernimmt. Fixdüsen sind nämlich weniger störanfällig und wirtschaftlicher in der Ausführung, da sie keine beweglichen Teile besitzen.

Mit dieser neuen Anordnung (fixe Düse/geregelte Düse) ist nun die Regelung und Steuerung der Turbine sehr vereinfacht und gleichzeitig der Automationsgrad gleich einer Turbine mit üblicher Ausführung (alle Düsen geregelt) erreicht worden. Somit sind die Anschaffungskosten für die Düsenregelung unabhängig von ihrer Düsenanzahl immer gleich. Zum Vergleich sei angeführt, dass bei einer vierdüsigen Turbinenausführung (alle Düsen geregelt) die Kosten nur für diese Baukomponente bis zu 50% der Turbine ausmachen.

Für einen optimalen Wirkungsgrad einer Turbine ist nicht nur das Laufrad verantwortlich, sondern eine Reihe anderer Funktionen und der damit verbundenen Vorteile. Nur das Zusammenspiel all dieser Komponenten und natürlich auch eine präzise Anfertigung der Bauteile gewährleistet einen Wirkungsgrad von über 90%.

Im erfindungsgemäßen Verfahren wird die Turbine im Zusammenhang mit dem Wasserstand geregelt, und somit sind Mittel vorgesehen um den Istwert des Wasserstandes bzw. Überwassers zu messen sowie Mittel zum Vergleich eines Sollwertes des Wasserstandes mit dem Istwert, welche die Differenz einem Regler übermitteln, der den Istwert dem Sollwert anpasst und dementsprechend die regelbare Düse mehr oder weniger öffnet. Sind für verschiedene Wasserstände entsprechende Sollwerte vorgegeben, so können diese Sollwerte mit Fixdüsen in Verbindung gebracht werden, wobei bei Überschreitung eines entsprechenden Sollwertes die entsprechende damit verbundene Fixdüse vollständig geöffnet wird, während bei Istwerten zwischen den vorgegebenen Sollwerten die regelbare Düse entsprechend des variablen Sollwertes geöffnet wird.

In einer bevorzugten Ausführungsform sind mindestens eine regelbare und drei fixe Düsen vorgesehen. Bei Erreichen von jeweils eines ersten, zweiten und dritten festen Sollwertes wird entsprechend die erste, zweite und dritte Fixdüse vollständig geöffnet bzw. geschlossen bei Unterschreiten des jeweiligen Sollwertes. Wesentlich für einen bestmöglichen Wirkungsgradverlauf ist die Abstimmung der Wasseraufteilung unter den Düsen, bzw. zwischen der regelbaren Düse und den einzelnen Fixdüsen.

Die Fixdüsen sind im Wirkungsgradoptimum auszulegen, während die regelbare Düse größer ausgelegt wird. Diese Auslegung der Düsen garantiert den bestmöglichen Betriebspunkt mit den Fixdüsen und gestattet gute Überschneidungspunkte beim Umschalten bzw. Zu- und Abschalten der Fixdüse.

Beispiel:

Gesamtwassermenge $Q = Q1 + a * Q2$

a =               1-5 Anzahl der Fixdüsen
Q1 =              Wassermenge der geregelten Düse
Q2 =              Wassermenge der einzelnen Fixdüsen
Q2 = 0,7 * Q1     wenn Wirkungsgradoptimum bei 70%
                  der maximal mit einer Düse (regelbare
                  Düse)verarbeitbaren Wassermenge
                  liegt.

z.B. a = 3 1 regelbare Düse + 3 Fixdüsen

$Q = 3 * 0,7 * Q1 + Q1 = 3,1$        $Q1 = 0,323 * Q$

$Q2 = 0,226 * Q$

Weitere Merkmale und Vorteile der mehrdüsigen Peltonturbine gemäß der vorliegenden Erfindung gehen aus den Patentansprüchen und aus der folgenden Beschreibung einer bevorzugten Ausführungsform einer Peltonturbine und eines Verfahrens zu deren Regelung hervor. In der Zeichnung zeigen,

Figur 1    schematisch einen Aufriss einen vierdüsigen Peltonturbine,

Figur 2    eine Draufsicht aus Figur 1, und

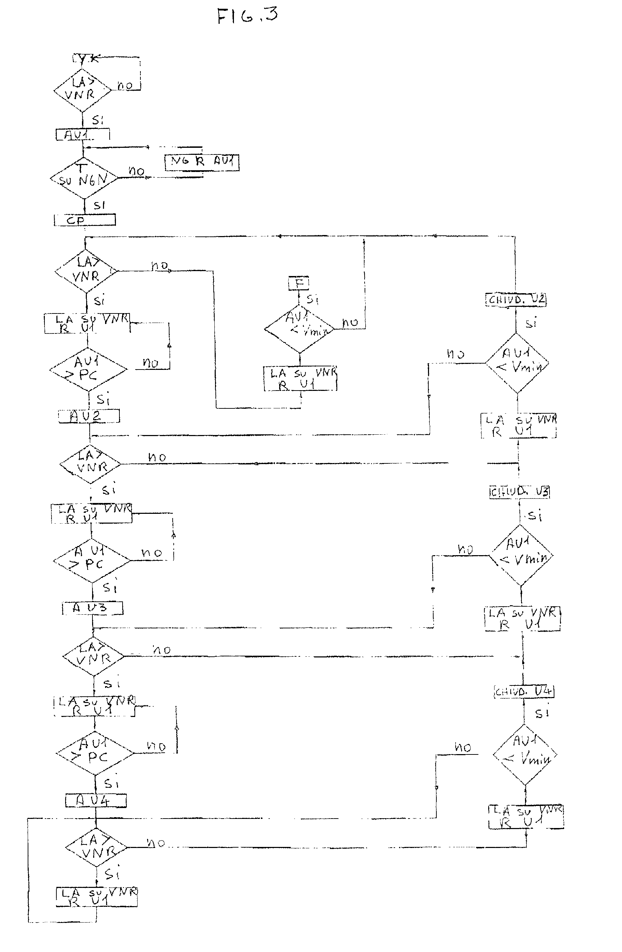

Figur 3    ein Flussdiagramm für eine mögliche Regelung der in Figur 1 und 2 dargestellten Peltonturbine.

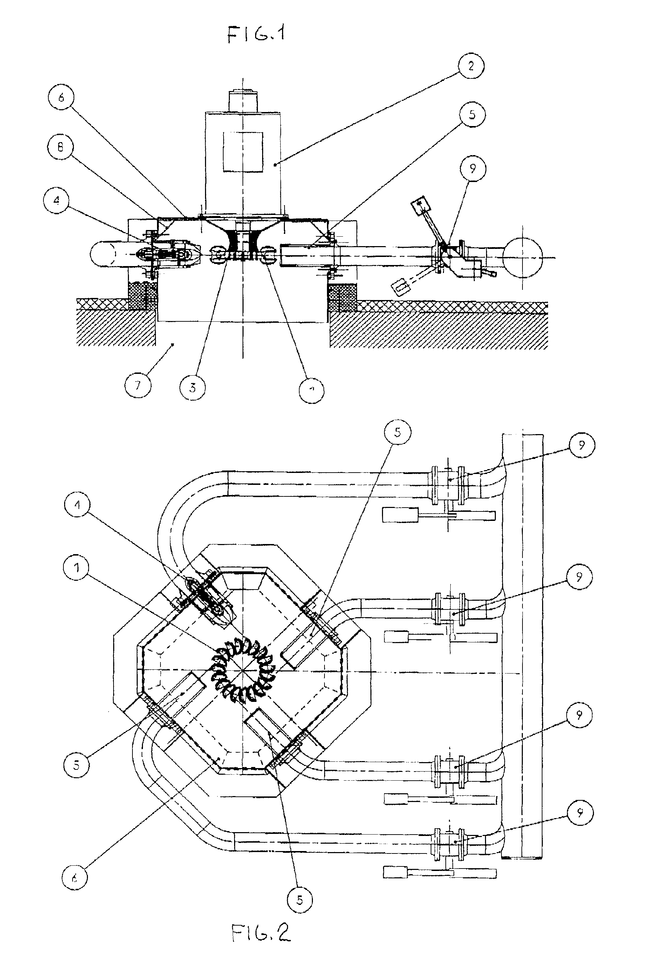

Diese Peltonturbine besteht im wesentlichen aus einem Turbinenrad 1 mit Radscheibe und Bechern, welches im Normalfall direkt an die Welle des Generators 2 gekoppelt ist.
Weiterhin ist das Rad mit an der Generatornabe angebrachten Ringen 3 ausgestattet, um die verlustfreie Abführung des Wassers zu gewährleisten. Das Turbinenrad wird durch mindestens einen und maximal sechs Triebflüssigkeitsstrahlen 4, 5 aus einer Hochdruckdüse tangential beaufschlagt, wobei je nach Leistungsbedarf und Wasserangebot einzelne Düsen zu- oder weggeschaltet werden können.
Das abgearbeitete Wasser wird durch das Turbinengehäuse 6 in den Unterwasserkanal 7 geleitet, wobei es zu diesem Zweck mit Führungsblechen 8 ausgestattet ist.
Das Besondere an der Bauweise dieser Turbine ist die Kombination von Düsen mit fixem Durchmesser 5 und somit festen Wasserdurchsatz und solchen mit regelbaren Austritt der Wassermenge 4.
Für den Startvorgang bleiben die nicht regelbaren Düsen mittels eines davor angeordneten Absperrorgans 9 geschlossen gehalten, während die regelbare Düse langsam öffnet und die Maschine auf Nenndrehzahl bringt. Ist keine größere Wassermenge zur Verfügung oder wird nicht mehr Leistung verlangt als mit dieser Düse abgearbeitet werden kann, regelt diese Düse die Drehzahl und eventuell den Wasserstand an der Fassungsstelle. Die Zuleitungen mit Fixdüse bleiben geschlossen. Wird nun mehr Leistung verlangt, können nun die nicht regelbaren Düsen zugeschaltet werden, indem das jeweilige Absperrorgan ganz geöffnet wird, während die Regeldüse wiederum die Regelung von Drehzahl und ev. Wasserstand übernimmt.
Das im Flussdiagramm dargestellte Beispiel zeigt eine regelbare Düse A (Position 4 aus Figur 1 und 2), die bei einem Istwert des Wasserstandes größer als einen vorgegebenen Regelsollwert geöffnet wird und die Turbine auf eine Istdrehzahl bringt, die mit einer Solldrehzahl verglichen wird, und bei Erreichen des Istwertes desselben wird die Drehzahl mit Herabsetzung der Öffnung der Düse A geregelt. Wird die Nenndrehzahl erreicht, so erfolgt ein Parallelschalten mit einem ev. vorhandenen Verteilernetz. Ist ein erster Sollwasserstand erreicht bzw. liegt er oberhalb eines Regelsollwertes, erfolgt durch ein Umschaltpunkt die Öffnung der zweiten Düse B, wird dieser Regelsollwert nicht erreicht, so wird die Düse A weiter in ihrer Öffnung geregelt und der Wasserstand wird auf den Regelsollwert mit der ersten Düse A geregelt und ist dabei der Istwert kleiner als ein bestimmter Mindestwert, so wird die Düse geschlossen und sonst wird die Düse neu geregelt.
Nach Öffnung der Düse B wird in der Düse A von neuem der Regelistwert erfasst und bei Überschreiten dieses Regelsollwertes wird der Wasserstand auf den Regelsollwert in der Düse A geregelt und bei Überschreiten desselben wird die dritte Düse C geöffnet, während unterhalb dieses Regelsollwertes die Düse A wieder auf den Regelsollwert eingestellt wird. Wird hingegen nach Öffnen der Düse B der Regelsollwert nicht erreicht, so wird der Wasserstand auf den Regelsollwert mit der Düse A geregelt und bei Unterschreiten eines Mindestwertes der Öffnung der Düse A wird die Düse B geschlossen. Dasselbe erfolgt bei Düse C und D.
Das angegebene Flussdiagramm ist nur beispielsweise dargestellt und es liegt nahe, dass die mehrdüsige Peltonturbine auch mehr als drei Fixdüsen oder auch weniger davon besitzen kann.

**Patentansprüche**

1.  Mehrdüsige Peltonturbine, umfassend ein Turbinenrad (1) mit Radscheibe und Bechern, eine Vielzahl von Druckdüsen (4, 5) zur Beaufschlagung der Becher, **gekennzeichnet durch** die Kombination von Düsen (5) mit fixem Durchmesser und somit festen Wasserdurchsatz und Düsen (4)mit regelbaren Austritt der Wassermenge, wobei je nach Leistungsbedarf und Wasserangebot einzelne feste Düsen zu- oder weggeschalten werden und die regelbaren Düsen (4) einen Wasserbedarf decken, der zwischen dem von zugeschalteten, offenen festen Düsen (5) gelieferten Wasserdurchsatz und jenem von einer einzigen, geschlossenen festen Düse (5) lieferbarem Durchsatz liegt

2. Peltonturbine nach Anspruch 1, **dadurch gekennzeichnet, dass** eine regelbare Düse (4) und drei feste Düsen (5) vorgesehen sind.

3. Peltonturbine nach einem der vorstehenden Ansprüchen, **dadurch gekennzeichnet, dass** die regelbare Düsen (4) Nadeldüsen sind.

4. Verfahren zur Regelung einer Peltonturbine nach einem der vorstehenden Ansprüche, **dadurch gekennzeichnet, dass** für den Startvorgang die nicht regelbaren Düsen mittels eines davor angeordneten Absperrorgans (9) geschlossen gehalten bleiben, während die regelbare Düse (4) langsam öffnet und die Turbine auf Nenndrehzahl bringt, wobei, sollte keine größere Wassermenge zur Verfügung sein oder nicht mehr Leistung verlangt wird als mit dieser Düse abgearbeitet werden kann, diese Düse die Drehzahl und eventuell den Wasserstand an der Fassungsstelle regelt, wobei die Zuleitungen mit Fixdüse bleiben geschlossen bleiben, wobei unter Erfordernis von mehr Leistung, die nicht regelbaren Düsen (5) zugeschaltet werden, indem das jeweilige Absperrorgan ganz geöffnet wird, während die Regeldüse (4) wiederum die Regelung von Drehzahl und ev. Wasserstand übernimmt.

5. Verfahren zur Regelung einer Peltonturbine nach einem der vorstehenden Ansprüche, **dadurch gekennzeichnet, dass** Mittel vorgesehen um den Istwert des Wasserstandes bzw. Überwassers zu messen sowie Mittel zum Vergleich eines Sollwertes des Wasserstandes mit dem Istwert, welche die Differenz einem Regler übermitteln, der den Istwert dem Sollwert anpasst und dementsprechend die regelbare Düse mehr oder weniger öffnet, wobei unter Vorgabe für verschiedenen Wasserständen entsprechende Sollwerte diese Sollwerte mit den Fixdüsen in Verbindung gebracht werden, wobei bei Überschreitung eines entsprechenden Sollwertes die entsprechende damit verbundene Fixdüse vollständig geöffnet wird, während bei Istwerten zwischen den vorgegebenen Sollwerten die regelbare Düse entsprechend des variablen Sollwertes geöffnet wird.

6. Verfahren nach Anspruch 5, **dadurch gekennzeichnet, dass** eine regelbare und drei fixe Düsen vorgesehen sind, wobei bei Erreichen jeweils eines ersten, zweiten und dritten festen Sollwertes entsprechend die erste, zweite und dritte Fixdüse vollständig geöffnet bzw. geschlossen wird bei Unterschreiten des jeweiligen Sollwertes.

FIG.1

FIG.2

FIG.3

**Europäisches Patentamt**

**EUROPÄISCHER RECHERCHENBERICHT**

Nummer der Anmeldung

EP 02 07 9485

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN<br>vol. 1998, no. 05,<br>30. April 1998 (1998-04-30)<br>& JP 10 026072 A (FUJI ELECTRIC CO LTD),<br>27. Januar 1998 (1998-01-27) | 1-4 | F03B15/20 |
| Y | * Zusammenfassung; Abbildungen 2,3 *<br>& PAJ, 'Online!<br>Gefunden im Internet:<br><URL:http://www6.ipdl.jpo.go.jp/Tokujitu/P<br>AJdetail.ipdl?N0000=60&N0120=01&N2001=2&N3<br>001=H10-026072> 'gefunden am 2003-02-06!<br>Translation provided by JPO<br>--- | 5,6 | |
| Y | PATENT ABSTRACTS OF JAPAN<br>vol. 009, no. 300 (M-433),<br>27. November 1985 (1985-11-27)<br>& JP 60 138281 A (FUJI DENKI SEIZO KK),<br>22. Juli 1985 (1985-07-22)<br>* Zusammenfassung *<br>--- | 5,6 | |
| A | PATENT ABSTRACTS OF JAPAN<br>vol. 015, no. 286 (M-1138),<br>19. Juli 1991 (1991-07-19)<br>& JP 03 100374 A (FUJI ELECTRIC CO LTD),<br>25. April 1991 (1991-04-25)<br>* Zusammenfassung *<br>--- | 1-4 | **RECHERCHIERTE SACHGEBIETE (Int.Cl.7)**<br><br>F03B |
| A | PATENT ABSTRACTS OF JAPAN<br>vol. 010, no. 062 (M-460),<br>12. März 1986 (1986-03-12)<br>& JP 60 206978 A (TOSHIBA KK),<br>18. Oktober 1985 (1985-10-18)<br>* Zusammenfassung *<br>---<br><br>-/-- | 1,3,4 | |

Der vorliegende Recherchenbericht wurde für alle Patentansprüche erstellt

| Recherchenort | Abschlußdatum der Recherche | Prüfer |
|---|---|---|
| DEN HAAG | 6. Februar 2003 | Angelucci, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

**Europäisches Patentamt**

**EUROPÄISCHER RECHERCHENBERICHT**

Nummer der Anmeldung

EP 02 07 9485

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN<br>vol. 1996, no. 12,<br>26. Dezember 1996 (1996-12-26)<br>& JP 08 218999 A (TOKYO ELECTRIC POWER CO INC:THE;FUJI ELECTRIC CO LTD),<br>27. August 1996 (1996-08-27)<br>* Zusammenfassung; Abbildung 4 *<br>----- | 1 | |

**RECHERCHIERTE SACHGEBIETE (Int.Cl.7)**

Der vorliegende Recherchenbericht wurde für alle Patentansprüche erstellt

| Recherchenort | Abschlußdatum der Recherche | Prüfer |
|---|---|---|
| DEN HAAG | 6. Februar 2003 | Angelucci, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03 82 (P04C03)

**ANHANG ZUM EUROPÄISCHEN RECHERCHENBERICHT
ÜBER DIE EUROPÄISCHE PATENTANMELDUNG NR.**

EP 02 07 9485

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-02-2003

| Im Recherchenbericht angeführtes Patentdokument | | Datum der Veröffentlichung | Mitglied(er) der Patentfamilie | | Datum der Veröffentlichung |
|---|---|---|---|---|---|
| JP 10026072 | A | 27-01-1998 | KEINE | | |
| JP 60138281 | A | 22-07-1985 | JP | 1014429 B | 10-03-1989 |
| | | | JP | 1528021 C | 30-10-1989 |
| JP 03100374 | A | 25-04-1991 | JP | 2087202 C | 02-09-1996 |
| | | | JP | 8006678 B | 29-01-1996 |
| JP 60206978 | A | 18-10-1985 | KEINE | | |
| JP 08218999 | A | 27-08-1996 | KEINE | | |

EPO FORM P0461

Für nähere Einzelheiten zu diesem Anhang : siehe Amtsblatt des Europäischen Patentamts, Nr.12/82